(19) Europäisches Patentamt
European Patent Office
Office européen des brevets

(11) **EP 3 694 117 B1**

(12) **EUROPEAN PATENT SPECIFICATION**

(45) Date of publication and mention
of the grant of the patent:
**03.08.2022 Bulletin 2022/31**

(21) Application number: **19305164.6**

(22) Date of filing: **11.02.2019**

(51) International Patent Classification (IPC):
***H04B 10/071*** *(2013.01)*

(52) Cooperative Patent Classification (CPC):
**H04B 10/071**

(54) **MULTI-CARRIER COHERENT CODED DISTRIBUTED ACOUSTIC SENSING**

MEHRTRÄGERKOHÄRENTE CODIERTE VERTEILTE AKUSTIKMESSUNG

DÉTECTION ACOUSTIQUE DISTRIBUÉE CODÉE COHÉRENTE MULTIPORTEUSES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.08.2020 Bulletin 2020/33**

(73) Proprietor: **Nokia Technologies Oy
02610 Espoo (FI)**

(72) Inventors:
• **AWWAD, Elie
92290 Châtenay-Malabry (FR)**
• **DORIZE, Christian
78320 Le Mesnil St Denis (FR)**

(74) Representative: **Mudge, Kevin
Bryers LLP
Bristol & Bath Science Park
Dirac Crescent, Emerson's Green
Bristol BS16 7FR (GB)**

(56) References cited:
**EP-A1- 2 765 400    WO-A1-2017/137729**

• **CHRISTIAN DORIZE ET AL: "Enhancing the
performance of coherent OTDR systems with
polarization diversity complementary codes",
OPTICS EXPRESS, vol. 26, no. 10, 4 May 2018
(2018-05-04), page 12878, XP055542643, DOI:
10.1364/OE.26.012878**

**Description**

BACKGROUND

Field of the Invention

Various example embodiments relate to optical equipment such as optical communication equipment and, more particularly but not exclusively, to optical sensing along an optical fiber using distributed acoustic/vibration sensing (DAS/DVS).

Description of the Related Art

This section introduces aspects that may help facilitate a better understanding of the invention. Accordingly, the statements of this section are to be read in this light and are not to be understood as admissions about what is prior art or what is not prior art.

In a number of different applications, it is useful to be able to detect time-based mechanical and/or chemical changes along an optical fiber, referred to herein collectively as fiber events. For example, in communications systems having fiber-optic communication links, it may be useful to detect the existence and location of fiber events in an optical fiber, such as those induced by a train passing nearby the optical fiber. This information may be used to monitor the quality of the optical link (e.g., a vibration may alter the transmission rate) or to monitor any fiber event independent of the telecom purpose (e.g., for security alerts).

Distributed acoustic/vibration sensing (DAS/DVS) allows for detection of mechanical and/or chemical perturbation at various locations along an optical fiber using Rayleigh backscattering. This effect can be exploited in standard single-mode fibers (SSMF) deployed in telecommunication systems. Randomly distributed Rayleigh backscattering spots exist in the fiber as imperfections during its fabrication process. By capturing the optical signal that is reflected from these spots, phase changes induced by fiber events impacting a deployed fiber can be detected.

Recent DAS/DVS systems use coherent detection to gain in sensitivity and linearity. See, e.g., X. Fan et al., "Distributed fiber-optic vibration sensing based on phase extraction from optical reflectometry," Journal of Lightwave Technology 35(16), 3281-3288 (2017), and H. Martins et al., "Real time dynamic strain monitoring of optical links using back reflection of live PSK data," Optics Express 24(19), 22303-22318 (2016). The phase of the backscattered optical signal, which is proportional to the fiber events impacting the fiber, is reconstructed, and its evolution over a space-time map is the basis of the coherent phase-sensitive DAS/DVS system. The phase tracking requires a very-narrow linewidth laser which serves as a phase reference. However, this same high-coherence property of the laser source generates a 'coherent fading' effect limiting the performance of the DAS/DVS system.

Indeed, given that the phase of the incident light is consistent for all the scattering points within a segment, so are the phases of the scattered light from each of them. The relative phase is fixed as long as the probe frequency is stable, and the fiber is undisturbed. Therefore, the scattered light consists of a summation of a large collection of electric fields that have a stable, however random, phase relationship. In some sections of the fiber, the phase of the diffusers will happen to be the same and a strong backscattered signal will result in this case. In other sections, the electric fields will cancel, resulting in a very weak signal. Coherent fading is hence a limiting factor in these systems because, at some points in the fiber and for a given signal frequency and pulse duration, the signal is near zero. Therefore, coherent fading prevents extracting a reliable phase estimate at all fiber segments having a weak backscatter intensity signal. For long fiber sections such as those used in telecom transmissions, this effect superposes with the natural fiber loss. These two combined effects limit the distance over which a fiber can be sensed.

J. Zhang et al., "Long range fading free phase-sensitive reflectometry based on multi-tone NLFM pulse," proceeding of 26th Conference on Optical Fiber Sensors (OFS), Lausanne, September 2018, proposed a scheme achieving a spectral diversity to cope with the coherent fading effect. The scheme implements a multi-frequency-chirps source that modulates the laser by means of an electro-optic modulator (EOM) and an acousto-optic modulator, significantly enhancing the distance (80km) over which the fiber can be sensed. However, the multi-chirp excitation, achieved by means of optical elements (EOM and acousto-optic modulators), has some limitations in terms of stability and flexibility. In addition, the scheme operates over a single polarization, hence does not solve the fading induced by random polarization rotations in the fiber.

Another state of the art optical sensing device is presented in EP 2 765 400 A1, where a distributed optical fiber sound wave detection device is described that uses an optical fiber as a sensor and can detect, with high sensitivity and high accuracy, sound waves that have arrived at various regions in the longitudinal direction of the optical fiber.

## SUMMARY

C. Dorize and E. Awwad, "Enhancing the performance of coherent OTDR systems with polarization diversity complementary codes," Optics Express, 26(10), pp. 12878-12890, 2018, and E. Awwad, C. Dorize, P. Brindel, J. Renaudier and G. Charlet, "Large Bandwidth Phase-Sensitive DAS with Novel Polarization-Multiplexed Probing Technique," Optical Fiber Sensors (OFS26) conference, Lausanne, Switzerland, paper ThE63, 2018, describe a method for periodically capturing a fine estimate (high sensitivity and large bandwidth) of the backpropagated optical field in a fiber. The method yields Jones matrix estimates in a distance versus time plane from which the differential (over distance) phase (at each location over the distance axis as a function of time) is processed to detect the emergence of any fiber event.

The scattered light at a given frequency is stable for a given fiber section. However, the response of the scatterers in the fiber changes with the probing frequency, leading to independent coherent fading patterns. This spectral diversity property may be exploited to capture several independent backscattering patterns of the same fiber until a reliable response is achieved over most if not all of the fiber segments.

Disclosed herein are various embodiments of optical sensing systems that employ optical sensing techniques for detecting and accurately estimating the locations of fiber events in optical fibers, which techniques aim to overcome coherent fading by introducing frequency diversity through multi-carrier coded probing sequences. In certain embodiments, a purely-digital spectral-diversity coherent differential-phase optical time-domain reflectometry (OTDR) system with polarization diversity further extends the performance and the flexibility of the prior art.

According to an example embodiment, provided is an apparatus comprising an optical transmitter and an optical receiver. The optical transmitter is configured to modulate a source signal based on one or more digital code sequences for each of multiple sub-bands to inject , via an optical circulator, a multi-carrier modulated optical signal into an optical fiber having a plurality of optical reflectors distributed along the optical fiber. The optical receiver is configured to (i) receive a multi-carrier reflected optical signal corresponding to reflections of the multi-carrier modulated optical signal from the optical reflectors and (ii) process the multi-carrier reflected optical signal using the at least one digital coding sequence to detect fiber events along the optical fiber, wherein each sub-band is encoded using binary-phase shift keying BPSK or quadrature-phase shift keying QPSK codes for X and Y polarizations of the multi-carrier modulated optical signal.

## BRIEF DESCRIPTION OF THE DRAWINGS

Embodiments of the invention will become more fully apparent from the following detailed description, the appended claims, and the accompanying drawings in which like reference numerals identify similar or identical elements.

FIG. 1 is a block diagram of an optical sensing system that is designed and configured to detect and determine the locations of fiber events along the length of an optical fiber;

FIG. 2 is a graphical representation of the polarization-multiplexed, multi-carrier probing signal;

FIG. 3 represents an OFDM coding scheme that can be used to generate the modulated signal of FIG. 1;

FIG. 4 is a block diagram of the processing performed by the DSP of FIG. 1 to detect fiber events in the optical fiber according to an embodiment; and

FIG. 5 is a block diagram of the processing performed by the DSP of FIG. 1 to detect fiber events in the optical fiber according to another embodiment.

## DETAILED DESCRIPTION

Detailed illustrative embodiments of the present invention are disclosed herein. However, specific structural and functional details disclosed herein are merely representative for purposes of describing example embodiments of the present invention. The present invention may be embodied in many alternate forms and should not be construed as limited to only the embodiments set forth herein. Further, the terminology used herein is for the purpose of describing particular embodiments only and is not intended to be limiting of example embodiments of the invention.

As used herein, the singular forms "a," "an," and "the," are intended to include the plural forms as well, unless the context clearly indicates otherwise. It further will be understood that the terms "comprises," "comprising," "includes," and/or "including," specify the presence of stated features, steps, or components, but do not preclude the presence or addition of one or more other features, steps, or components. It also should be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

At least some embodiments disclosed herein may benefit from the use of at least some features disclosed in C. Dorize and E. Awwad, "Enhancing the performance of coherent OTDR systems with polarization diversity complementary codes," Optics Express, 26(10), 12878-12890 (2018) ("the Dorize/Awwad paper"). In particular, some embodiments may benefit from the use of the DAS/DVS technique(s) disclosed therein. An example DAS/DVS technique described herein enables detection of fiber events along an optical fiber using distributed acoustic/vibration sensing based on optical phase sensing of Rayleigh backscattering in which the reflections of complementary data sequences in multiple different sub-bands transmitted along the optical fiber are analyzed to detect temporal changes in the characteristics of different locations along the optical fiber.

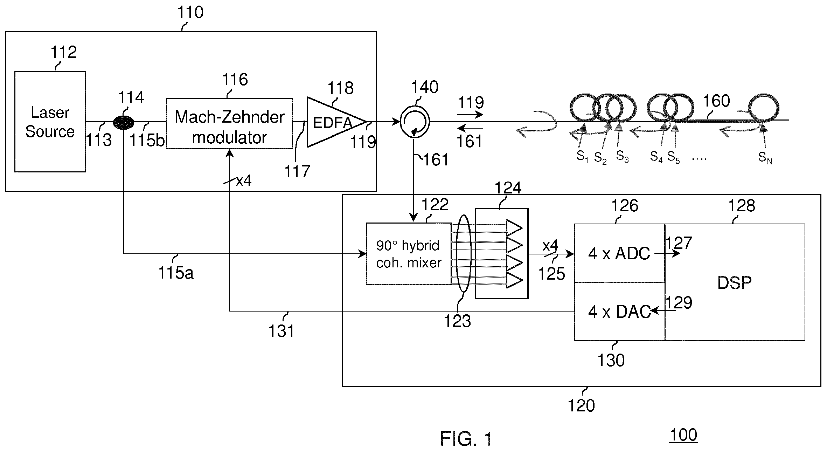

FIG. 1 is a block diagram of an optical sensing system 100 that is designed and configured to detect and determine the locations of fiber events along the length of an optical fiber 160. The following discussion describes the generic operations of the optical sensing system 100. The frequency-diverse operations of the optical sensing system 100 are described after the generic description.

Generic Description

System 100 comprises an optical transmitter 110, an optical receiver 120, and an optical circulator 140. As indicated in FIG. 1, the optical fiber 160 has a number (M) of Rayleigh backscatterers $S_m$ distributed along its length, where the Rayleigh backscatterers $S_1$, $S_2$, ..., $S_M$ are intrinsic features formed during the fabrication of a doped optical fiber. As described previously, the term "fiber event" is used to refer to a mechanical and/or chemical change at a location along the length of the optical fiber 150 that results in a significant change in the differential phases of the signals reflected by one or more Rayleigh backscatterers located downstream of the fiber event.

As used herein, the term "upstream" refers to locations along the optical fiber 150 that are closer to the optical transmitter 110, while the term "downstream" refers to locations along the optical fiber 150 that are farther from the optical transmitter 110. Thus, in FIG. 1, backscatterers $S_1$ and $S_2$ are upstream of backscatterer $S_3$, and backscatterers $S_4$ and $S_5$ are downstream of backscatterer $S_3$.

In the particular implementation of FIG. 1, the optical transmitter 110 comprises a high coherence laser source 112, a polarization-maintaining (PM) coupler 114, a Mach-Zehnder (MZ) (or other suitable polarization diversity) optical modulator 116, and an erbium-doped fiber amplifier (EDFA) 118. The PM coupler 114 taps off a portion 115a of the polarized laser source signal 113 generated by the laser source 112 and forwards that portion 115a to the optical receiver 120. The MZ modulator 118 modulates the remainder 115b of the laser signal based on four digital-coded analog signals 131 generated by the optical receiver 120 to generate a modulated optical signal 117 that is amplified by the EDFA 118 to generate the outgoing modulated optical signal 119. In one possible implementation, the four digital-coded analog signals 131 are based on complementary binary phase shift-keying (BPSK) in-phase I and quadrature Q codes that get modulated onto the horizontal (X) and vertical (Y) polarization components of the polarized laser signal 115b. Those skilled in the art will understand that other coding schemes may be employed, including quadrature-phase shift keying (QPSK).

The optical transmitter 110 injects the modulated optical signal 119 into the optical fiber 160 via the optical circulator 140, where the modulated optical signal 119 gets partially reflected by each Rayleigh backscatterer $S_m$ back towards the optical transmitter 110. The resulting optical signal 161 received by the optical circulator 140 from the optical fiber 160 is the superposition of all of the different reflected signals from the different Rayleigh backscatterers shifted in time (e.g., differential phase) relative to one another based on the round-trip transmission time from the optical circulator 140 to the particular backscatterer and then back to the optical circulator 140. The combined reflected optical signal 161 is forwarded by the optical circulator 140 to the optical receiver 120, which processes the optical signal 161 to characterize the various reflected signals from the backscatterers at specified locations along the optical fiber 160, where the location d of each backscatterer is associated with and can be identified by a unique round-trip transmission time based on its distance along the optical fiber 160.

The optical receiver 120 of FIG. 1 is a dual-polarization coherent receiver that comprises a 90-degree hybrid coherent mixer 122, four optical-to-electrical (O-to-E) converters 124, four analog-to-digital converters (ADCs) 126, a digital signal processor (DSP) 128, and four digital-to-analog converters (DACs) 130.

The DSP 128 generates four digital code sequences 129 that are converted by the DACs 130 into the four digital-coded analog signals 131 that are used by the MZ modulator 116 to generate the modulated optical signal 117.

The mixer 122, which comprises two single-polarization 90-degree hybrids (not shown), mixes the optical signal 161 received from the optical circulator 140 with the tapped polarized laser signal 115a received from the PM coupler 114 to generate eight different optical components 123 corresponding to the in-phase and quadrature beating signals between the horizontal and vertical polarization components of the polarized laser signal 115a and the horizontal and vertical polarization components of the reflected optical signal 161. The O-to-E converters 124 converts those eight optical components 123 into four analog electrical signals 125 that get digitized by the four ADCs 126 into digital signals 127 that are processed by the DSP 128. In one implementation, the O-to-E converters 124 are four balanced photodetector pairs configured to convert the eight optical components 123 into four analog electrical signals and four trans-impedance amplifiers (TIAs) configured to amplify the four analog electrical signals to generate the four analog electrical signals 125 that are digitized by the four ADCs 126.

The DSP 128 determines the channel response of the optical fiber 160 by performing correlations between the digital signals 127 and the digital code sequences 129 used to generate the digital-coded analog signals 131 and then generates Jones matrices for different locations along the optical fiber 160 using corresponding data points of the channel response. Assuming that the optical fiber 160 has been probed jointly on both polarization axes by means of complementary digital code sequences, the DSP 128 is configured to generate 2x2 Jones matrices $J(d,t)$ at time index $t$ and distance index $d$ from the four digital signals 127, e.g., using some of the procedures disclosed in the Dorize/Awwad paper.

The DSP 128 derives, from the Jones matrices, differential phase data $\varphi(d,t)$ as a function of time t for different locations d along the optical fiber 160, where each location is identified by a distance index value d representative of the round-trip transmission time for that location. The DSP 128 (or some other processing module downstream of the DSP 128) analyzes the differential phase data to identify fiber events. For example, if the DSP 128 detects a sinusoidal oscillation over time in the differential phase data for a particular location, then the DSP 128 can determine that a vibration in the optical fiber 160 occurred at or near that location. If, on the other hand, the DSP 128 detects a step function over time in the differential phase data for a particular location, then the DSP 128 can determine that a chemical change in the optical fiber 160 occurred at or near that location.

The transmission of the modulated optical signal 119 can be periodically repeated, as long as reflections corresponding to different transmissions of the digital codes do not overlap. One way to prevent such overlap is to ensure that the employed digital codes are at least as long as the maximum round-trip transmission time from the optical circulator 140 to the last backscatterer and back. In that case, the modulated optical signal 119 can be transmitted continuously.

Frequency-Diverse Operations

According to techniques proposed herein, the optical sensing system 100 of FIG. 1 can be employed to further extend the distance over which a fiber, such as fiber 160, can be reliably sensed by managing the coherent fading effect using frequency diversity. This is of major importance when targeting the sensing of already deployed telecom fibers. In certain implementations, the polarized laser signal 115b has a sufficiently long coherence time, and each of the four digital-coded analog signals 131, used by the optical transmitter 110 to modulate the long-coherence-time laser signal 115b to generate the modulated optical signal 119, is a multi-carrier signal composed of N spectral sub-bands, where the spectral distance between two adjacent sub-bands is typically chosen to provide independent Rayleigh backscatters. In an embodiment, the laser source 112 that drives the transmitter 110 and the receiver 120 has a coherence time greater than the maximum propagation time of the optical signal 119 on the optical fiber 160 from the transmitter 110 to the receiver 120.

In one example, the optical sensing system 100 monitors the optical fiber 160 to monitor ground comprising oil and gas resources. The symbol frequency is determined as $f_{symb}$=100MHz, with $d_s$=10m and the optical fiber 160 length=1km. The coherence time of the laser source 112 is then on the magnitude of $10^{-5}$s corresponding to a spectral line width of 100 kHz.

In another example, the optical sensing system 100 monitors the optical fiber 160 in a medical application. The Rayleigh backscatterers in the optical fiber 160 are achieved with Rayleigh effect with a symbol rate of $f_{symb}$=10GHz offering a resolution of 1cm to 10cm, for a length=1m for the optical fiber 160. The coherence time of the laser source 112 is on the magnitude of $10^{-7}$s corresponding to a spectral line width of 10MHz.

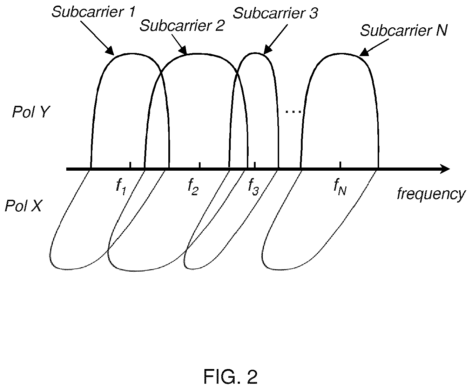

FIG. 2 is a graphical representation of the polarization-multiplexed, multi-carrier digital coded analog signals 131 having N spectral sub-bands at N different center frequencies $f_1$-$f_N$ and used by the MZ modulator 116 to modulate the X and Y polarization axes of the laser signal 115b in generating the polarization-multiplexed, multi-carrier, modulated optical signal 119. Note that, as represented in FIG. 2, different sub-bands may have different bandwidths (i.e., baud rates), and the code sequences may be the same or different for different sub-bands.

The reflected optical signal 161 provided to the optical receiver 120 will be the superposition of all of the reflections of the polarization-multiplexed, multi-carrier, modulated optical signal 119 from the various backscatterers $S_i$ along the length of the optical fiber 160. By probing the optical fiber 160 using the modulated optical signal 119 having N different sub-bands, the reflected optical signal 161 can be used to generate N independent characterizations of the optical fiber 160. While each characterization might not identify all of the different fiber events along the optical fiber 160, since the different characterizations at different frequencies will typically identify different (albeit typically overlapping) subsets of the fiber events, having multiple characterizations increases the total number of detected fiber events and reduces the incidence of false negatives (i.e., undetected fiber events). Moreover, due to the combination of the intrinsic fiber loss and to the coherent fading, the probability of any given characterization failing to detect a fiber event increases for fiber events that occur further downstream along the optical fiber 160. As such, having multiple independent characterizations of the optical fiber 160 extends the length of the effectiveness of the multi-carrier probing technique along the optical fiber as compared to a conventional single-carrier probing technique.

OFDM-Based Coding

In certain implementations of the fiber probing technique described above, the N sub-bands all have the same bandwidth and are regularly spaced in frequency. In such a case, the transmitted multi-carrier, modulated optical signal 119 of FIG. 1 is conveniently digitally achieved using an orthogonal frequency-division multiplexing (OFDM) coding scheme.

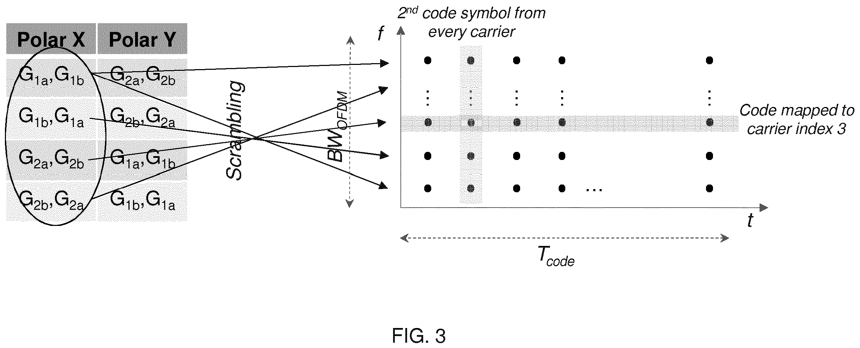

FIG. 3 represents an OFDM coding scheme that can be used to generate the multi-carrier, modulated optical signal 119 of FIG. 1. The right-hand side of FIG. 3 presents a generic two-dimensional graphical representation of an X-axis OFDM code used to modulate the X polarization axis of the multi-carrier, modulated optical signal 119, where each dot represents a different OFDM symbol in the X-axis OFDM code. The X-axis OFDM code is divided into N rows, one for each sub-band in the multi-carrier, modulated optical signal 119. The horizontal axis of the graphical representation is time, and the vertical axis is frequency. According to this OFDM coding scheme, the OFDM symbols in the first row are used (from left to right) to modulate the X polarization axis for the first sub-band of the modulated optical signal 119, the OFDM symbols in the second row are used (from left to right) to modulate the X polarization axis for the second sub-band of the modulated optical signal 119, and so on up to the *N*th row of the OFDM symbols and the Nth sub-band of the modulated optical signal 119. Although not shown in FIG. 3, there is also a Y-axis OFDM code that can be represented by an analogous two-dimensional graph and that is used simultaneously and similarly to modulate the Y polarization axis for the different sub-bands of the multi-carrier, modulated optical signal 119.

In the OFDM coding scheme of FIG. 3, Golay sequences are used to generate the X- and Y-axis OFDM codes. In general, a Golay sequence G(n) contains a sequence of values, where each value is either +1 or -1. Two Golay sequences $G_a(n)$ and $G_b(n)$ are said to be complementary if they exhibit the following property:

$$G_a(n) \otimes G_a(n) + G_b(n) \otimes G_b(n) = \delta(n) \qquad (1)$$

where n is for a given symbol, $\otimes$ is the correlation operator, and $\delta$ is the Dirac delta function.

In the OFDM coding scheme of FIG. 3, for each sub-band, two different pairs of complementary Golay sequences are used to generate the digital-code sequences 129 used to modulate the optical signal 119. The first pair of complementary sequences $G_{1a}$, $G_{1b}$ is defined as:

$$G_{1a}(n) \otimes G_{1a}(n) + G_{1b}(n) \otimes G_{1b}(n) = \delta(n) \qquad (2)$$

The second pair of complementary sequences $G_{2a}$, $G_{2b}$ is generated to be mutually orthogonal with the first pair, such that:

$$G_{2a}(n) \otimes G_{2a}(n) + G_{2b}(n) \otimes G_{2b}(n) = \delta(n) \qquad (3)$$

$$G_{1a}(n) \otimes G_{2a}(n) + G_{1b}(n) \otimes G_{2b}(n) = 0 \qquad (4)$$

$$G_{a1}(n) \otimes G_{b1}(n) + G_{a2}(n) \otimes G_{b2}(n) = 0 \qquad (5)$$

The following represents four Golay sequences having length $N_G=4$:

$$G_{1a}^4 = [\ 1, -1, -1, -1] \qquad (6)$$

$$G_{1b}^4 = [-1, \ 1, -1, -1] \qquad (7)$$

$$G_{2a}^4 = [-1, -1, \ 1, -1] \qquad (8)$$

$$G_{2b}^4 = [\ 1, \ 1, \ 1, -1] \qquad (9)$$

Longer Golay sequences can be generated using the following recursive relationships:

$$G_{1a}^{2Ng} = \begin{bmatrix} G_{1a}^{Ng}, & G_{1b}^{Ng} \end{bmatrix} \tag{10}$$

$$G_{1b}^{2Ng} = \begin{bmatrix} G_{1a}^{Ng}, -G_{1b}^{Ng} \end{bmatrix} \tag{11}$$

$$G_{2a}^{2Ng} = \begin{bmatrix} G_{2a}^{Ng}, & G_{2b}^{Ng} \end{bmatrix} \tag{12}$$

$$G_{2b}^{2Ng} = \begin{bmatrix} G_{2a}^{Ng}, -G_{2b}^{Ng} \end{bmatrix} \tag{13}$$

The table on the left-hand side of FIG. 3 represents four different combinations of Golay sequences $G_{1a}$, $G_{1b}$, $G_{2a}$, and $G_{2b}$ that can be used to generate the OFDM symbols for each row of the X- and Y-axis OFDM codes. For example, as indicated in the first row of the table, if the Golay sequences $G_{1a}$ and $G_{1b}$ are used to generate the OFDM symbols for a particular row of the X-axis OFDM code, then the Golay sequences $G_{2a}$ and $G_{2b}$ are used to generate the OFDM symbols for the same row of the Y-axis OFDM code.

In general, any row of the table of Golay sequences can be used to generate any corresponding rows of the X- and Y-axis OFDM codes. The scrambling arrows shown in FIG. 3 represent one possible mapping between the table of Golay sequences and the X-axis OFDM code. According to that particular mapping, the first row of Golay sequences is used to generate the OFDM symbols for the first sub-band, the second row of Golay sequences is used to generate the OFDM symbols for the second sub-band, the fourth row of Golay sequences is used to generate the OFDM symbols for the third sub-band, and so on until the OFDM symbols for the Nth sub-band, which are generated using the first row of Golay sequences.

In one possible implementation of the OFDM coding scheme of FIG. 3, the Golay sequences of Equations (6)-(9) are used and each OFDM symbol is a BPSK symbol. In that case, the X-axis OFDM code has eight columns of BPSK symbols, where each BPSK symbol encodes one value from the corresponding Golay sequence. Thus, for the first row of the X-axis OFDM code, the first four BPSK symbols encode the Golay sequence $G_{1a}^4 = [1, -1, -1, -1]$, and the last four BPSK symbols encode the Golay sequence $G_{1b}^4 = [-1, 1, -1, -1]$. For the first row of the Y-axis OFDM code, the first four BPSK symbols encode the Golay sequence $G_{2a}^4 = [-1, -1, 1, -1]$, and the last four BPSK symbols encode the Golay sequence $G_{2b}^4 = [1, 1, 1, -1]$. The other rows of the X- and Y-axis OFDM codes are generated in similar fashion based on the corresponding mapping from the table of Golay sequences.

In another possible implementation of the OFDM coding scheme of FIG. 3, the Golay sequences of Equations (6)-(9) are used and each OFDM symbol is a QPSK symbol. In that case, the X-axis OFDM code has only four columns of QPSK symbols, where each QPSK symbol encodes one value from each of the two corresponding Golay sequences. Thus, for the first row of the X-axis OFDM code, the first QPSK symbol encodes the first value (i.e., 1) in the Golay sequence $G_{1a}^4 = [1, -1, -1, -1]$ and the first value (i.e., -1) in the Golay sequence $G_{1b}^4 = [-1, 1, -1, -1]$, the second QPSK symbol encodes the second value (i.e., -1) in the Golay sequence $G_{1a}^4 = [1, -1, -1, -1]$ and the second value (i.e., 1) in the Golay sequence $G_{1b}^4 = [-1, 1, -1, -1]$, and so on for the third and fourth QPSK symbols. For the first row of the Y-axis OFDM code, the first QPSK symbol encodes the first value (i.e., -1) in the Golay sequence $G_{2a}^4 = [-1, -1, 1, -1]$ and the first value (i.e., 1) in the Golay sequence $G_{2b}^4 = [1, 1, 1, -1]$, the second QPSK symbol encodes the second value (i.e., -1) in the Golay sequence $G_{2a}^4 = [-1, -1, 1, -1]$ and the second value (i.e., 1) in the Golay sequence $G_{2b}^4 = [1, 1, 1, -1]$, and so on for the third and fourth QPSK symbols. Here, too, the other rows of the X- and Y-axis OFDM codes are generated in similar fashion based on the corresponding mapping from the table of Golay sequences.

Whether the OFDM symbols are BPSK symbols or QPSK symbols, the DSP 128 uses the resulting X- and Y-axis OFDM codes to generate the four digital code sequences 129 that are converted by the DACs 130 into the four multi-carrier, digital-coded analog signals 131 used by the MZ modulator 116 to modulate the laser signal 115b to generate the multi-carrier, modulated optical signal 119. In particular, to generate the two digital code sequences 129 corresponding to the I and Q codes for the X polarization axis, the DSP 128 sequentially applies an inverse fast Fourier transform (IFFT) of size N to each column of the X-axis OFDM code of FIG. 3, starting with the left-most column and moving from left to right. At the same time, to generate the two digital code sequences 129 corresponding to the I and Q codes for the Y polarization axis, the DSP 128 sequentially applies an IFFT of size N to each column of the Y-axis OFDM code, starting with the left-most column and moving from left to right.

Depending on the particular implementation, the four sets of digital code sequences 129 can be stored by the DSP 128 for subsequent re-transmission or the IFFT processing can be repeated for each re-transmission.

In general, as mentioned previously, it is possible to use the same set of digital codes to generate each different sub-band in the modulated optical signal 119. Doing so, however, can result in relatively large values for the optical signal's peak-to-average power ratio (PAPR), which can reduce the effectiveness of the fiber-event detection scheme. Those skilled in the art will understand that using different ordering of the Golay sequences to generate different rows of the X- and Y-axis OFDM codes for different sub-bands will reduce the PAPR of the resulting multi-carrier, modulated signal 119, which will tend to improve the performance of the fiber-event detection scheme.

The following description applies to processing associated with the first sub-band of the multi-carrier, modulated signal 119 for the OFDM coding scheme shown in FIG. 3, where each OFDM symbol is a BPSK symbol. Analogous processing is performed for each of the other sub-bands.

The two complementary and orthogonal pairs of Golay sequences $G_{1a}$, $G_{1b}$ and $G_{2a}$, $G_{2b}$ are transmitted simultaneously. BPSK modulation is used to code the pairs of sequences. Using complementary and orthogonal pairs of sequences enables the sending of the sequences to be factorized. On the X polarization axis, the two sequences $G_{1a}$, $G_{1b}$ of the first complementary pair are successively mapped onto BPSK symbols. At the same time, on the Y polarization axis, the two sequences $G_{2a}$, $G_{2b}$ of the second complementary pair are successively mapped onto BPSK symbols. The BPSK symbols from the two polarizations axes are transmitted simultaneously: the BPSK symbols carrying $G_{1a}$ on the X polarization axis are sent at the same time as the BPSK symbols carrying $G_{2a}$ on the Y polarization axis, and then the BPSK symbols carrying $G_{1b}$ on the X polarization axis are sent at the same time as the BPSK symbols carrying $G_{2b}$ on the Y polarization axis.

In an example, the factorization of the parts of the pairs for the X and Y polarizations are as follows:

$$E_{tx}(n + kP) = G_{xI}(n) + jG_{xQ}(n) \qquad (14)$$

$$E_{ty}(n + kP) = G_{yI}(n) + jG_{yQ}(n) \qquad (15)$$

where $E_{tx}$ is the component from the X polarization of the optical signal 119, $E_{ty}$ is the component from the Y polarization of the optical signal 119, P is the repetition period, k is the k-th repetition of period $P$, $G_x$ and $G_y$ being respective complementary Golay sequences.

In an example where BPSK is used, the terms $G_{xQ}$ and $G_{yQ}$ are set to 0 and:

$$G_{xI}(n) = \begin{cases} G_{1a}(n); 0 \leq n < N_G \\ 0; N_G \leq n < N_G + N_{Sep} \\ G_{1b}(n - N_G - N_{Sep}); N_G + N_{Sep} \leq n < 2N_G + N_{Sep} \\ 0; 2N_G + N_{Sep} \leq n < L \end{cases} \qquad (16)$$

$$G_{yI}(n) = \begin{cases} G_{2a}(n); 0 \leq n < N_G \\ 0; N_G \leq n < N_G + N_{Sep} \\ G_{2b}(n - N_G - N_{Sep}); N_G + N_{Sep} \leq n < 2N_G + N_{Sep} \\ 0; 2N_G + N_{Sep} \leq n < L \end{cases} \qquad (17)$$

where $N_G$ is the length of a sequence from the pair, $N_{Sep}$ is a separation interval, and $L=2(N_G+N_{Sep})$ is the overall transmitted code length.

The sequence $G_{1a}$ is transmitted first on the X polarization together with the sequence $G_{2a}$ on the Y polarization, then, after a separation interval, the sequence $G_{1b}$ is transmitted on the X polarization together with the sequence $G_{2b}$ on the Y polarization.

At the receiver 120, the reflected optical signal 161 comprises the following components:

$$E_{rx}(n) = h_{xx}(n) * G_x(n) + h_{xy}(n) * G_y(n) \qquad (18)$$

$$E_{ry}(n) = h_{yx}(n) * G_x(n) + h_{yy}(n) * G_y(n) \qquad (19)$$

where $E_{rx}$ is the X polarization component, $E_{ry}$ is the Y polarization component, $h_{xx}$ is the channel response of the optical fiber 160 for the X polarization, $h_{yy}$ is the channel response of the optical fiber 160 for the Y polarization, $h_{xy}$ is the channel response after modulation onto the Y polarization and measured onto the X polarization at the receiver 120, and $h_{yx}$ is the channel response after modulation onto the X polarization and measured onto the Y polarization at the receiver 120.

The polarization-dependent channel responses as observed at the receiver 120 can then be expressed as:

$$h'_{xx}(n) = E_{rx}(n) \otimes G_x(n) \qquad (20)$$

$$h'_{xy}(n) = E_{rx}(n) \otimes G_y(n) \qquad (21)$$

$$h'_{yx}(n) = E_{ry}(n) \otimes G_x(n) \qquad (22)$$

$$h'_{yy}(n) = E_{ry}(n) \otimes G_y(n) \qquad (23)$$

where the Jones matrices $J$ are defined as:

$$J = \begin{bmatrix} h'_{xx}(n) & h'_{xy}(n) \\ h'_{yx}(n) & h'_{yy}(n) \end{bmatrix} \qquad (24)$$

In an embodiment, the probing sequence duration is determined according to $N_G$, $N_{sep}$, and the duration of a symbol $T_{symb}$. In an example, a perfect estimation with only null samples around the Dirac response is achievable if the optical fiber 160 has an impulse response with a duration $T_{ir}$ that spreads over a time less than $(N_G/2+N_{sep})T_{symb}$. In another example, the sequence length $N_G$ and the separation interval $N_{Sep}$ are determined such that $N_G>2(T_{ir}/T_{symb}-N_{Sep})$.

The following description applies to processing associated with the first sub-band of the multi-carrier modulated signal 119 for the OFDM coding scheme shown in FIG. 3, where each OFDM symbol is a QPSK symbol. QPSK coding is applicable for optical fibers having equally spaced extrinsic reflectors with relatively high reflection levels instead of the randomly spaced intrinsic Rayleigh backscatterers of optical fiber 160. Analogous processing is performed for each of the other sub-bands.

In this embodiment, QPSK modulation is used, and the polarization components are structured with an additional complex component. The complex polarization components of the optical signal 119 at the transmitter 110 are as follows:

$$E_{tx}(n + kN) = G_{xI}(n) + jG_{xQ}(n) \qquad (25)$$

$$E_{ty}(n + kN) = G_{yI}(n) + jG_{yQ}(n) \qquad (26)$$

where $E_{tx}$ and $E_{ty}$ are complex signals with respective real parts $G_{xI}$ and $G_{yI}$ and respective imaginary parts $G_{xQ}$ and $G_{yQ}$.

The components of the reflected optical signal 161 at the receiver 120 are, for the X polarization:

$$E_{rx}(n) = h_{xx}(n) * E_{tx}(n) + h_{xy}(n) * E_{ty}(n)$$

$$= h_{xx}(n) * (G_{xI}(n) + jG_{xQ}(n)) + h_{xy}(n) * (G_{yI}(n) + jG_{yQ}(n)) \qquad (27)$$

and, for the Y polarization:

$$E_{ry}(n) = h_{yx}(n) * E_{tx}(n) + h_{yy}(n) * E_{ty}(n)$$

$$= h_{yx}(n) * (G_{xI}(n) + jG_{xQ}(n)) + h_{yy}(n) * (G_{yI}(n) + jG_{yQ}(n)) \qquad (28)$$

The correlation processes to estimate the impulse response for the X and Y polarizations are as follows:

$$h'_{xx}(n) = E_{rx}(n) \otimes (G_{xI}(n) + jG_{xQ}(n))$$

$$= h_{xx} * (G_{xI} \otimes G_{xI} + G_{xQ} \otimes G_{xQ} + j(G_{xQ} \otimes G_{xI} - G_{xI} \otimes G_{xQ})) +$$

$$h_{xy} * (G_{yI} \otimes G_{xI} + G_{yQ} \otimes G_{xQ} + j(G_{yQ} \otimes G_{xI} - G_{yI} \otimes G_{xQ})) \qquad (29)$$

$$h'_{xy}(n) = E_{rx}(n) \otimes (G_{yI}(n) + jG_{yQ}(n))$$

$$= h_{xx} * (G_{xI} \otimes G_{yI} + G_{xQ} \otimes G_{yQ} + j(G_{xQ} \otimes G_{yI} - G_{xI} \otimes G_{yQ})) +$$

$$h_{xy} * (G_{yI} \otimes G_{yI} + G_{yQ} \otimes G_{yQ} + j(G_{yQ} \otimes G_{yI} - G_{yI} \otimes G_{yQ})) \qquad (30)$$

$$h'_{yx}(n) = E_{ry}(n) \otimes (G_{xI}(n) + jG_{xQ}(n))$$

$$= h_{yx} * (G_{xI} \otimes G_{xI} + G_{xQ} \otimes G_{xQ} + j(G_{xQ} \otimes G_{xI} - G_{xI} \otimes G_{xQ})) +$$

$$h_{yy} * (G_{yI} \otimes G_{xI} + G_{yQ} \otimes G_{xQ} + j(G_{yQ} \otimes G_{xI} - G_{yI} \otimes G_{xQ})) \qquad (31)$$

$$h'_{yy}(n) = E_{ry}(n) \otimes (G_{yI}(n) + jG_{yQ}(n))$$

$$= h_{yx} * (G_{xI} \otimes G_{yI} + G_{xQ} \otimes G_{yQ} + j(G_{xQ} \otimes G_{yI} - G_{xI} \otimes G_{yQ})) +$$

$$h_{yy} * (G_{yI} \otimes G_{yI} + G_{yQ} \otimes G_{yQ} + j(G_{yQ} \otimes G_{yI} - G_{yI} \otimes G_{yQ})) \qquad (32)$$

Estimation is achievable without crosstalk when the following correlation results hold:

For $h'_{xx}$ and for $h'_{yx}$:

$$G_{xI} \otimes G_{xI} + G_{xQ} \otimes G_{xQ} = \delta \qquad (33)$$

$$G_{xQ} \otimes G_{xI} - G_{xI} \otimes G_{xQ} = 0 \qquad (34)$$

$$G_{yI} \otimes G_{xI} + G_{yQ} \otimes G_{xQ} = 0 \qquad (35)$$

$$G_{yQ} \otimes G_{xI} - G_{yI} \otimes G_{xQ} = 0 \qquad (36)$$

For $h'_{xy}$ and for $h'_{yy}$

$$G_{xI} \otimes G_{yI} + G_{xQ} \otimes G_{yQ} = 0 \qquad (37)$$

$$G_{xQ} \otimes G_{yI} - G_{xI} \otimes G_{yQ} = 0 \qquad (38)$$

$$G_{yI} \otimes G_{yI} + G_{yQ} \otimes G_{yQ} = \delta \qquad (39)$$

$$G_{yQ} \otimes G_{yI} - G_{yI} \otimes G_{yQ} = 0 \qquad (40)$$

With mutually orthogonal codes, Equations (33), (35) (37), (39), are satisfied everywhere, while Equations (34), (36), (38), (40), equal zero for every 4 samples.

When a QPSK modulation is used to code the pair of sequences, using complementary and orthogonal pairs of sequences enable the sending of the sequences to be factorized. On the X polarization axis, the first pair $G_{1a}$, $G_{1b}$ is mapped on QPSK symbols. On the Y polarization axis, the second pair $G_{2a}$, $G_{2b}$ is mapped on QPSK symbols. The QPSK symbols from the two polarizations axes are transmitted simultaneously: the QPSK symbols carrying $G_{1a}$ and $G_{1b}$ on X polarization axis are sent at the same time as the QPSK symbols carrying $G_{2a}$ and $G_{2b}$ on the Y polarization axis. The combination of QPSK modulation with complementary and orthogonal pairs of sequences can be advantageous since it enables a reduction in the transmission time by a factor 2 compared to the use of BSPK modulation.

The pairs of sequences are mapped as follows onto the QPSK symbols:

$$G_{xI}(n) = G_{a1}(n), G_{xQ}(n) = G_{b1}(n) \qquad (41)$$

$$G_{yI}(n) = G_{a2}(n), G_{yQ}(n) = G_{b2}(n) \qquad (42)$$

At the optical receiver 120, the channel responses yielded by the correlation processes are:

$$h'_{xx}(n) = h_{xx}(n) + j \left( h_{xx}(n) * (G_{xQ}(n) \otimes G_{xI}(n) - G_{xI}(n) \otimes G_{xQ}(n)) \right) +$$

$$\left( h_{xy}(n) * (G_{yQ}(n) \otimes G_{xI}(n) - G_{yI}(n) \otimes G_{xQ}(n)) \right) \qquad (43)$$

$$h'_{xy}(n) = h_{xy}(n) - j \left( h_{xy}(n) * (G_{xQ}(n) \otimes G_{xI}(n) - G_{xI}(n) \otimes G_{xQ}(n)) \right) +$$

$$\left( h_{xx}(n) * (G_{yQ}(-n) \otimes G_{xI}(-n) - G_{yI}(-n) \otimes G_{xQ}(-n)) \right) \qquad (44)$$

$$h'_{yx}(n) = h_{yx}(n) + j\left(h_{yx}(n) * (G_{xQ}(n) \otimes G_{xI}(n) - G_{xI}(n) \otimes G_{xQ}(n)\right) +$$

$$\left(h_{yy}(n) * (G_{yQ}(n) \otimes G_{xI}(n) - G_{yI}(n) \otimes G_{xQ}(n)\right) \qquad (45)$$

$$h'_{yy}(n) = h_{yy}(n) - j\left(h_{yy}(n) * (G_{xQ}(n) \otimes G_{xI}(n) - G_{xI}(n) \otimes G_{xQ}(n)\right) +$$

$$\left(h_{yx}(n) * (G_{yQ}(-n) \otimes G_{xI}(-n) - G_{yI}(-n) \otimes G_{xQ}(-n)\right) \qquad (46)$$

The DSP 128 determines $h'_{xx}$ and $h'_{xy}$, and $h'_{yy}$ and $h'_{yx}$ from the complementary and mutual orthogonality of the pairs of sequences mapped onto the complex components of the polarization of the optical signal 119. The pairs of sequences are transmitted simultaneously on the two polarization axes.

In an embodiment, the symbol rate of the optical signal is determined according to the distance between the Rayleigh backscatterers, in order to increase the number of null samples of the inter-correlations of the components $G_{xI}$, $G_{xQ}$, $G_{yI}$, $G_{yQ}$. In an example, the symbol rate is determined as follows:

$$f_{symb} = \frac{4p}{\frac{2n_g d_s}{c}} \qquad (47)$$

where $f_{symb}$ is the symbol rate, $n_g$ is the fiber group index, c is the light velocity, $d_s$ is the average inter-distance between Rayleigh backscatterers, and p is an integer. In an example, with 10m of inter-distance $d_s$ between the Rayleigh back-scatterers, $f_{symb}$ is a multiple of 40MHz.

In an embodiment, the transmission of the pairs of sequences $G_{1a}$, $G_{1b}$ and $G_{2a}$, $G_{2b}$ is repeated. Such repetitions are advantageous as the optical fiber 160 and the Rayleigh backscatterers are sounded continuously, thereby enabling monitoring fiber events within the optical fiber 160 with a fine time granularity, which depends on the symbol frequency. The sounding duration of the optical fiber 160 is performed then during a duty cycle.

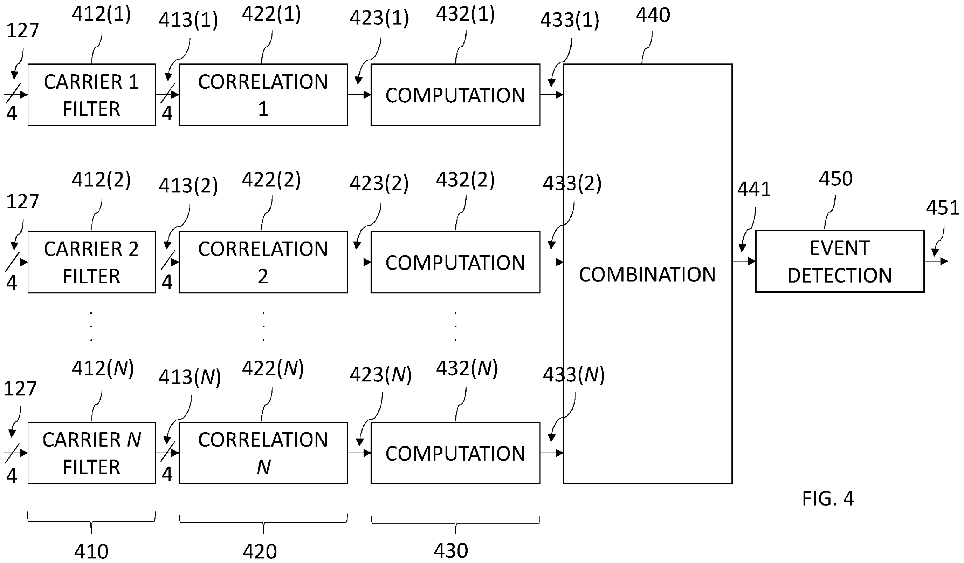

FIG. 4 is a block diagram of the processing performed by the DSP 128 of FIG. 1 to detect fiber events 451 in the optical fiber 160 according to an embodiment. A data recovery stage 410 has N different digital matched carrier filters 412(*i*), one for each different sub-band in the multi-carrier optical signal 119. Each carrier filter 412(i) filters the four multi-band digital signals 127 received from the four ADCs 126 of FIG. 1 to generate four corresponding baseband signals 413(i) that capture, in baseband, information in the corresponding sub-band. Those skilled in the art will understand that, in an alternative embodiment, in certain implementations where the subbands all have the same bandwidth and are equally spaced in frequency, instead of using N matched carrier filters 412(1)-412(N) for the data recovery stage 410, the DSP 128 can apply four appropriate fast Fourier transforms (FFTs) of size N, one to each of the four multi-band digital signals 127 to recover the four different digital signals 413(i) of FIG. 3 for each of the N different sub-bands.

In either case, the 4*N* data streams 413(1)-413(N) are processed in a correlation stage 420 having N different correlation modules 422(1)-422(N), one for each different sub-band. Each correlation module 422(i) performs correlation processing between the four corresponding baseband signals 413(i) and the four digital code sequences used to modulate the corresponding sub-band of the optical signal 119 of FIG. 1 in order to extract a space-time map of the Jones matrices $J_i(d,t)$ (423(*i*)) for that sub-band. The correlation processing consists of four correlations to estimate the four coefficients of the 2x2 Jones matrices describing the temporal evolution of intensity, differential phase, and SOP along the sensed optical fiber 160 segment by segment. For the OFDM-BPSK coding scheme described previously, example correlations are presented in Equations (20)-(23). For the OFDM-QPSK coding scheme described previously, example correlations are presented in Equations (29)-(32).

For each sub-band, the spatial resolution (i.e., the size of the fiber segments over which the Jones matrices are computed) is fixed by the baud rate of the sub-band, and the temporal resolution is given by the length of the probing code. The estimates of the Jones matrices are refreshed with a temporal resolution given by the period $T_{code}$ of the probing sequence assuming that the sensed fiber is probed by a repetition of this sequence. Note that $T_{code}$ fixes the maximum bandwidth *BW* of the fiber events that can be monitored: $BW = 1/(2T_{code})$.

Following the correlation stage 420 is a computation stage 430 having *N* computation modules 432(1)-432(*N*), where each computation module 432(*i*) processes the corresponding sub-band Jones matrices 423(*i*) to generate fiber data 433(*i*) for the corresponding sub-band *i*. In an embodiment, the fiber data 433(*i*) includes, for the sub-band *i*, sub-band differential phase data $\varphi_i(d,t)$, sub-band optical intensity data $I_i(d,t)$, and sub-band state of polarization data $SOP_i(d,t)$ at different locations d along the optical fiber 160 and at times $t$.

The DSP 128 derives absolute phase values $\Psi_{t,d}$ from the Jones matrices $J$ by calculating $\Psi_{t,d}=(1/2)arg(det(J))$, where $det$ stands for the determinant of matrix $J$ and $arg$ stands for the angle, expressed in radians, of the complex value $det(J)$. The absolute phase value $\Psi_{t,d}$ for a location d represents the offset at time t between signal reflected from that location and received at the optical receiver 120. The DSP 128 generates differential (over distance) phase values $\varphi_{t,d}$ by calculating $\varphi_{t,d} = (\Psi_{t,d} - \Psi_{t,d-1})$, where each differential phase value $\varphi_{t,d}$ represents the difference between the absolute phase value $\Psi_{t,d}$ for the location $d$ and the absolute phase value $\Psi_{t,d-1}$ for the previous location $d-1$. As used herein, the term "previous location" refers to the location that is immediately upstream from the location d. For the first location (i.e., the location d closest to the optical circulator 140), the absolute phase value $\Psi_{t,d}$ for that location may be used as a reference to extract the differential phases $\varphi_{t,d}$ of the downstream locations.

The DSP 128 generates the sub-band intensity data $I_i(d,t)$ as $Trace(J.J^*)$ for each selected location d and time $t$, where $Trace$ refers to the sum of the elements on the diagonal of a matrix, $J^*$ stands for the conjugate transpose of the $2\times2$ Jones matrix $J$, and $(J.J^*)$ represents the matrix product of the two matrices.

The DSP 128 generates the sub-band SOP data $SOP(d,t)$ from the Jones matrices using a suitable technique such as those based on the conventional Stokes or Muller mathematical transformation.

Each sub-band is subject to independent coherent fading effects that locally lead to non-reliable Jones matrix estimates of the optical fiber 160 where a potential fiber event could not be localized. To overcome these local gaps, in a combination stage 440, the DSP 128 combines the $N$ distinct estimations of the sub-band differential phase data $\varphi_i(d,t)$ to generate combined differential phase data $\varphi(d,t)$ (441) at different locations $d$ and times $t$ for the optical fiber 160 with an enhanced SNR (signal-to-noise ratio) and reach compared to a standard single-band coherent sensing technique. In an example embodiment, the DSP 128 generates the combined differential phase data $\varphi(d,t)$ using a maximum ratio combining (MRC) process in which the sub-band differential phase data $\varphi_i(d,t)$ are weighted by the corresponding sub-

$$\varphi = \frac{\sum_{i=1}^{N} I_i \times \varphi_i}{\sum_{i=1}^{N} I_i},$$

band intensity data $I_i(d,t)$:

In an event detection stage 450, the DSP 128 (or, in some alternative implementations, a processor external to the DSP) monitors the combined differential phase data 441 over multiple transmissions of the modulated optical signal 119 to detect fiber events 551. When a fiber event eventually occurs at some location along the optical fiber 160, the DSP 128 can detect that fiber event based on the temporal changes in the differential phase data 441 for the Rayleigh backscatterer located immediately downstream of the fiber event (referred to as the "detected location"). If the combined differential phase data 441 at a detected location indicates the existence of a fiber event, then the DSP 128 can conclude that the fiber event has occurred at or immediately upstream of that detected location.

For example, assuming that the locations of backscatterers $S_3$ and $S_4$ in FIG. 1 are two consecutive locations along the optical fiber 160, if the DSP 128 detects the existence of a fiber event in the combined differential phase data 441 corresponding to the location of backscatterer $S_4$, then the DSP 128 can conclude that the fiber event occurred at a location that is somewhere (i) downstream of backscatterer $S_3$ and (ii) at or upstream of backscatterer $S_4$.

In one possible implementation, the DSP 128 can be configured to conclude that a fiber event has occurred when the variance of the combined differential phase data 441 for a location d over a specified duration exceeds a specified variance threshold level. Other implementations may apply other criteria for detecting fiber events, including but not limited to thresholding the magnitude of the change in the combined differential phase data 441 over a specified duration. A possible alternative criterion would be to search for a significant value or a significant change in the value in the power spectral density of the combined differential phase data 441, for example, the occurrence of a spectral peak.

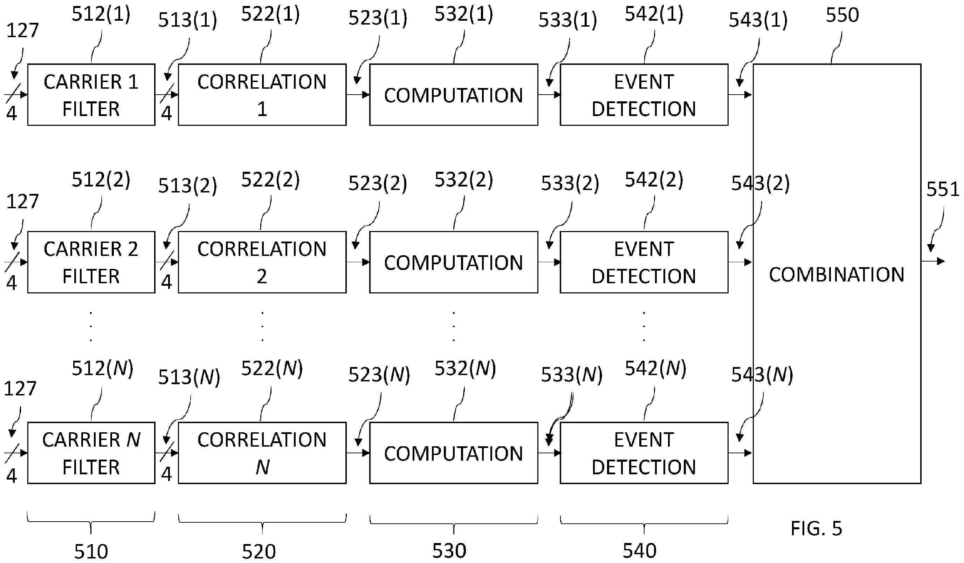

FIG. 5 is a block diagram of the processing performed by the DSP 128 of FIG. 1 to detect fiber events 551 in the optical fiber 160 according to yet another embodiment. The processing of FIG. 5 is similar to the processing of FIG. 4 with analogous labels representing analogous elements, except that, instead of combining the sub-band differential phase data $\varphi_i(d,t)$ (433($i$)) to generate the combined differential phase data $\varphi(d,t)$ (441), in FIG. 5, in an event detection stage 540 having N sub-band event detection modules 542(1)-542($N$), the DSP 128 (or in some alternative implementations, a processor external to the DSP) independently monitors the sub-band differential phase data $\varphi_i(d,t)$ (533($i$)) for each sub-band i to detect a sub-band set of fiber events 543($i$) for that sub-band.

In a typical application of the processing of FIG. 5, each sub-band event detection module 542($i$) will detect some but not all of the fiber events in the optical fiber 160, with different sub-band modules 542($i$) detecting some of the same fiber events while possibly failing to detect one or more different fiber events. A combination module 550 combines the N different, typically overlapping sub-band sets of fiber events 543(1)-543($N$) to generate a combined set of fiber events 551 for the optical fiber 160, for example, by generating the union of the sub-band sets.

In the OFDM coding scheme of FIG. 3, all of the sub-bands in the optical signal 119 of FIG. 1 are modulated at the same baud rate with codes having the same code length. In alternative implementations, different sub-bands can be modulated with codes having different lengths.

In single-carrier DAS/DVS systems using excitation codes, the segment size (i.e., the native spatial resolution) $)d$ is given by the symbol rate $F_{symb}$ of the probing code: $)d = c_{fiber}/(2F_{symb})$, where $c_{fiber}$ stands for the celerity of light in the fiber. For the present multi-carrier system, different native spatial resolutions may be independently defined for the sub-bands by using different baud rates for different sub-bands. In that case, the optical sensing system 100 of FIG. 1 simultaneously probes the optical fiber 160 at several different native spatial resolutions by transmitting, through the sub-carriers, different codes with various symbol rates.

As described earlier, the optical sensing system 100 of FIG. 1 employs an optical modulation scheme based on four digital coding sequences for each different sub-band comprising BPSK or QPSK codes for each of the X and Y polarization axes. Other embodiments are possible. For example, an alternative optical sensing system could employ an optical modulation scheme based on only two digital coding sequences for each different sub-band comprising BPSK or QPSK codes for only one polarization axis. For such an embodiment, only two DACs 130 would be needed to convert the two digital code sequences 129 generated by the DSP 128 into two digital-coded analog signals 131 used by the MZ modulator 116 to modulate only one polarization of the source laser signal 115b to generate the modulated optical signal 119. Such an embodiment would still have four ADCs 126 to digitize the four analog signals 125 recovered from the reflected signal 161, and the DSP 128 could still have the architecture of any of FIGs. 4-5.

As another example, another alternative optical sensing system could employ an optical modulation scheme based on two pseudo-random digital coding sequences: one for each of the X and Y polarization axes. Here, too, only two DACs 130 would be needed to convert the two digital code sequences 129 generated by the DSP 128 into two digital-coded analog signals 131 used by the MZ modulator 116 to modulate the X and Y polarizations of the source laser signal 115b to generate the modulated optical signal 119. Here, too, such an embodiment would still have four ADCs 126 to digitize the four analog signals 125 recovered from the reflected signal 161, and the DSP 128 could still have the architecture of any of FIGs. 4-5.

As yet another example, yet another alternative optical sensing system could employ an optical modulation scheme based on only one pseudo-random digital coding sequences applied to only one of the X and Y polarization axes. Here, only one DAC 130 would be needed to convert the one digital code sequence 129 generated by the DSP 128 into one digital-coded analog signal 131 used by the MZ modulator 116 to modulate only one polarization of the source laser signal 115b to generate the modulated optical signal 119. Here, too, such an embodiment would still have four ADCs 126 to digitize the four analog signals 125 recovered from the reflected signal 161, and the DSP 128 could still have the architecture of any of FIGs. 4-5.

The optical sensing system 100 and the optical fiber 160 of FIG. 1 could be used as a sensor designed to detect external events that produce fiber events in the optical fiber 160, such as earthquakes, passing trains, car/pedestrian traffic, intrusions in sensitive areas, etc. The optical sensing system 100 and the optical fiber 160 could also be used to as a sensor to detect the presence of certain chemicals that impact the differential phases of the reflected optical signals. Such chemical events may result in a single temporal differential phase change rather than multiple differential phase changes over time. In that case, such fiber events can be detected by thresholding the temporal differential phase change rather than thresholding variance.

Although embodiments have been described, in which the optical fiber 160 has intrinsic Rayleigh backscatterers, in other embodiments, the optical fiber 160 may also or instead have extrinsic reflectors, such as micro-mirrors or fiber Bragg gratings, that are purposefully incorporated into the optical fiber 160 at specific, known locations that might or might not be at fixed spatial intervals.

Embodiments have been described that employ a polarization-multiplexed probing sequence and a dual-polarization coherent optical receiver 120 having a dual-polarization 90-degree hybrid coherent mixer 122 that generates eight optical component signals 123 and four O-to-E converters 124 that generate four digital signals 125. Alternative embodiments can employ (i) a single polarization probing sequence and a coherent optical receiver having a single-polarization 90-degree hybrid coherent mixer that generates four optical component signals and (ii) an O-to-E converter that generates only two digital signals. In that case, the DSP 128 would be able to generate only scalar complex results, instead of full Jones matrices, from which noisier (e.g., due to polarization fading in Rayleigh backscattered signals) differential phase estimates could be extracted.

Although embodiments have been described that detect fiber events based on differential phase data, in alternative embodiments, fiber events can be detected based on state of polarization (SOP) data. For example, the DSP 128 can be configured to monitor the SOP data for temporal variations that indicate the occurrence of fiber events. SOP data is estimated from the full Jones matrix. SOP is commonly represented as a Stokes vector (a set of 4 values describing the polarization state of an electromagnetic field). The impact that a Jones matrix J has on a Stokes vector can be given by computing the 4x4 Mueller matrix $M$ as $M = A(J \otimes J^*)A^{-1}$ where $\otimes$ is the tensor Kronecker product and $A =$

$$\begin{bmatrix} 1 & 0 & 0 & 1 \\ 1 & 0 & 0 & -1 \\ 0 & 1 & 1 & 0 \\ 0 & -i & i & 0 \end{bmatrix}.$$

Various modifications of the described embodiments, as well as other embodiments within the scope of the disclosure, which are apparent to persons skilled in the art to which the disclosure pertains are deemed to lie within the principle and scope of the disclosure, e.g., as expressed in the appended claims.

According to an example embodiment disclosed above in reference to FIGs. 1-5, provided is an apparatus (e.g., 100, FIG. 1) comprising an optical transmitter (100) and an optical receiver (120) and a method for providing such apparatus. The optical transmitter (110) is configured to modulate a source signal (115b) based on one or more digital code sequences (129) for each of multiple sub-bands to inject , via an optical circulator (140), a multi-carrier modulated optical signal (119) into an optical fiber (160) having a plurality of optical reflectors ($S_m$) distributed along the optical fiber. The optical receiver (120) configured to (i) receive a multi-carrier reflected optical signal (161) corresponding to reflections of the multi-carrier modulated optical signal from the optical reflectors and (ii) process the multi-carrier reflected optical signal using the at least one digital coding sequence to detect fiber events along the optical fiber, wherein each sub-band is encoded using binary-phase shift keying BPSK or quadrature-phase shift keying QPSK codes for X and Y polarizations of the multi-carrier modulated optical signal.

In some embodiments of any of the above apparatuses and methods, the BPSK or QPSK codes for the multiple sub-bands form a two-dimensional X-axis orthogonal frequency-division multiplexing OFDM code and a two-dimensional Y-axis OFDM code. Each row of the X-axis OFDM code and the corresponding row of the Y-axis OFDM code correspond to a different sub-band of the multi-carrier optical signal, and each column of the X-axis OFDM code and corresponding column of the Y-axis OFDM code correspond to a different transmission time for the multi-carrier optical signal.

In some embodiments of any of the above apparatuses and methods, each row of the X-axis OFDM code and each corresponding row of the Y-axis OFDM code are generated using a set of Golay sequences, and the rows of the X- and Y-axis OFDM codes are generated using two or more different sets of Golay sequences.

In some embodiments of any of the above apparatuses and methods, the receiver comprises a data recovery stage (410, 510) configured to recover baseband data (413($i$), 513($i$)) from each sub-band in the multi-carrier reflected optical signal and a correlation stage (420, 520) configured to generate sub-band Jones matrices (423($i$), 523($i$)) for each sub-band from the recovered baseband data for the sub-band.

In some embodiments of any of the above apparatuses and methods, the receiver further comprises a computation stage (430, FIG. 4) configured to generate sub-band differential phase data (433($i$)) for each sub-band from the corresponding sub-band Jones matrices, a combination module (440) configured to combine the sub-band differential phase data for the multiple sub-bands to generate combined differential phase data (441) and an event detection module (450) configured to process the combined differential phase data to detect the fiber events (451) along the optical fiber.

In some embodiments of any of the above apparatuses and methods, the receiver further comprises a computation stage (530, FIG. 5) configured to generate sub-band differential phase data (533($i$)) for each sub-band from the corresponding sub-band Jones matrices, an event detection stage (540) configured to process the sub-band differential phase data to detect a sub-band set of the fiber events (543($i$)) along the optical fiber for each sub-band, and a combination module (550) configured to combine the sub-band sets of fiber events for the multiple sub-bands to generate a combined set of the fiber events (551) along the optical fiber.

In some embodiments of any of the above apparatuses and methods, the optical transmitter (110) comprises a laser source (112) configured to generate a laser signal (113); an optical coupler (114) configured to tap off a tapped portion (115a) of the laser signal for forwarding to the optical receiver (120); and a modulator (116) and an amplifier (118) configured to modulate and amplify another portion (115b) of the laser signal using the one or more digital coding sequences to generate the multi-carrier modulated optical signal (119). The optical receiver (120) comprises an optical mixer (122) configured to mix the tapped portion (115a) of the laser signal with the multi-carrier reflected optical signal (151) to generate component optical signals (123); optical-to-electrical converters (124) and analog-to-digital converters (126) configured to generate digital electrical signals (127) from the component optical signals (123); and a digital signal processor DSP (128) configured to process the digital electrical signals (127) to detect the fiber events along the optical fiber.

Unless explicitly stated otherwise, each numerical value and range should be interpreted as being approximate as if the word "about" or "approximately" preceded the value or range.

It will be further understood that various changes in the details, materials, and arrangements of the parts which have been described and illustrated in order to explain the nature of this disclosure may be made by those skilled in the art without departing from the scope of the disclosure, e.g., as expressed in the following claims.

Although the elements in the following method claims, if any, are recited in a particular sequence with corresponding labeling, unless the claim recitations otherwise imply a particular sequence for implementing some or all of those elements, those elements are not necessarily intended to be limited to being implemented in that particular sequence.

Reference herein to "one embodiment" or "an embodiment" means that a particular feature, structure, or characteristic described in connection with the embodiment can be included in at least one embodiment of the disclosure. The appearances of the phrase "in one embodiment" in various places in the specification are not necessarily all referring to the same embodiment, nor are separate or alternative embodiments necessarily mutually exclusive of other embodiments. The same applies to the term "implementation."

Also for purposes of this description, the terms "couple," "coupling," "coupled," "connect," "connecting," or "connected" refer to any manner known in the art or later developed in which energy is allowed to be transferred between two or more elements, and the interposition of one or more additional elements is contemplated, although not required. Conversely, the terms "directly coupled," "directly connected," etc., imply the absence of such additional elements.

The described embodiments are to be considered in all respects as only illustrative and not restrictive. In particular, the scope of the disclosure is indicated by the appended claims rather than by the description and figures herein. All changes that come within the meaning and range of equivalency of the claims are to be embraced within their scope.

A person of ordinary skill in the art would readily recognize that steps of various above-described methods can be performed by programmed computers. Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as a magnetic disks or tapes, hard drives, or optically readable digital data storage media. The embodiments are also intended to cover computers programmed to perform said steps of methods described herein.

The functions of the various elements shown in the figures, including any functional blocks labeled as "processors" and/or "controllers," may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In this specification including any claims, the term "each" may be used to refer to one or more specified characteristics of a plurality of previously recited elements or steps. When used with the open-ended term "comprising," the recitation of the term "each" does not exclude additional, unrecited elements or steps. Thus, it will be understood that an apparatus may have additional, unrecited elements and a method may have additional, unrecited steps, where the additional, unrecited elements or steps do not have the one or more specified characteristics.

The use of figure numbers and/or figure reference labels in the claims is intended to identify one or more possible embodiments of the claimed subject matter in order to facilitate the interpretation of the claims. Such use is not to be construed as necessarily limiting the scope of those claims to the embodiments shown in the corresponding figures.

As used in this application, the term "circuitry" may refer to one or more or all of the following: (a) hardware-only circuit implementations (such as implementations in only analog and/or digital circuitry); (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); and (c) hardware circuit(s) and or processor(s), such as a microprocessor(s) or a portion of a microprocessor(s), that requires software (e.g., firmware) for operation, but the software may not be present when it is not needed for operation." This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

It should be appreciated by those of ordinary skill in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

As used herein and in the claims, the term "provide" with respect to an apparatus or with respect to a system, device, or component encompasses designing or fabricating the apparatus, system, device, or component; causing the apparatus, system, device, or component to be designed or fabricated; and/or obtaining the apparatus, system, device, or component by purchase, lease, rental, or other contractual arrangement.

Unless otherwise specified herein, the use of the ordinal adjectives "first," "second," "third," etc., to refer to an object of a plurality of like objects merely indicates that different instances of such like objects are being referred to, and is not intended to imply that the like objects so referred-to have to be in a corresponding order or sequence, either temporally, spatially, in ranking, or in any other manner.

**Claims**

1. An apparatus (100) comprising:

    an optical transmitter (110) configured to modulate a source signal (115b) based on one or more digital code sequences (129) for each of multiple sub-bands to inject, via an optical circulator 140, a multi-carrier modulated optical signal (119) into an optical fiber (160) having a plurality of optical reflectors ($S_m$) distributed along the optical fiber; and
    an optical receiver (120) configured to (i) receive a multi-carrier reflected optical signal (161) corresponding to reflections of the multi-carrier modulated optical signal from the optical reflectors and (ii) process the multi-carrier reflected optical signal using the at least one digital coding sequence to detect fiber events along the optical fiber, wherein each sub-band is encoded using binary-phase shift keying BPSK or quadrature-phase shift keying QPSK codes for X and Y polarizations of the multi-carrier modulated optical signal.

2. The apparatus of claim 1, wherein the BPSK or QPSK codes for the multiple sub-bands form a two-dimensional X-axis orthogonal frequency-division multiplexing OFDM code and a two-dimensional Y-axis OFDM code, wherein:

    each row of the X-axis OFDM code and the corresponding row of the Y-axis OFDM code correspond to a different sub-band of the multi-carrier optical signal; and
    each column of the X-axis OFDM code and corresponding column of the Y-axis OFDM code correspond to a different transmission time for the multi-carrier optical signal.

3. The apparatus of claim 2, wherein:

    each row of the X-axis OFDM code and each corresponding row of the Y-axis OFDM code are generated using a set of Golay sequences; and
    the rows of the X- and Y-axis OFDM codes are generated using two or more different sets of Golay sequences.

4. The apparatus of any one of claims 1-3, wherein the receiver comprises:

    a data recovery stage (410, 510) configured to recover baseband data (413($i$), 513($i$)) from each sub-band in the multi-carrier reflected optical signal; and
    a correlation stage (420, 520) configured to generate sub-band Jones matrices (423($i$), 523($i$)) for each sub-band from the recovered baseband data for the sub-band.

5. The apparatus of claim 4, wherein the receiver further comprises:

    a computation stage (430) configured to generate sub-band differential phase data (433($i$)) for each sub-band from the corresponding sub-band Jones matrices;
    a combination module (440) configured to combine the sub-band differential phase data for the multiple sub-bands to generate combined differential phase data (441); and
    an event detection module (450) configured to process the combined differential phase data to detect the fiber events (451) along the optical fiber.

6. The apparatus of claim 4, wherein the receiver further comprises:

a computation stage (530) configured to generate sub-band differential phase data (533($i$)) for each sub-band from the corresponding sub-band Jones matrices;

an event detection stage (540) configured to process the sub-band differential phase data to detect a sub-band set of the fiber events (543($i$)) along the optical fiber for each sub-band; and

a combination module (550) configured to combine the sub-band sets of fiber events for the multiple sub-bands to generate a combined set of the fiber events (551) along the optical fiber.

7.  The apparatus of any one of claims 1-6, wherein:

the optical transmitter (110) comprises:

a laser source (112) configured to generate a laser signal (113);
an optical coupler (114) configured to tap off a tapped portion (115a) of the laser signal for forwarding to the optical receiver (120);
a modulator (116) and an amplifier (118) configured to modulate and amplify another portion (115b) of the laser signal using the one or more digital coding sequences to generate the multi-carrier modulated optical signal (119); and

the optical receiver (120) comprises:

an optical mixer (122) configured to mix the tapped portion (115a) of the laser signal with the multi-carrier reflected optical signal (151) to generate component optical signals (123);
optical-to-electrical converters (124) and analog-to-digital converters (126) configured to generate digital electrical signals (127) from the component optical signals (123); and
a digital signal processor DSP (128) configured to process the digital electrical signals (127) to detect the fiber events along the optical fiber.

8.  A method for detecting fiber events along an optical fiber (160) having a plurality of optical reflectors ($S_m$) distributed along the optical fiber, the method comprising:

modulating a source signal (115b) based on one or more digital code sequences (129) for each of multiple sub-bands using an optical transmitter (110) to generate a multi-carrier modulated optical signal (119);
injecting the multi-carrier modulated optical signal (119), via an optical circulator (140), into the optical fiber (160); and
using an optical receiver (120) for:
(i) receiving a multi-carrier reflected optical signal (161) corresponding to reflections of the multi-carrier modulated optical signal from the optical reflectors and (ii) processing the multi-carrier reflected optical signal using the at least one digital coding sequence to detect fiber events along the optical fiber, wherein the optical transmitter encodes each sub-band using binary-phase shift keying BPSK or quadrature-phase shift keying QPSK codes for X and Y polarizations of the multi-carrier modulated optical signal.

9.  The method of claim 8, wherein the BPSK or QPSK codes for the multiple sub-bands form a two-dimensional X-axis orthogonal frequency-division multiplexing OFDM code and a two-dimensional Y-axis OFDM code, wherein:

each row of the X-axis OFDM code and the corresponding row of the Y-axis OFDM code correspond to a different sub-band of the multi-carrier optical signal; and
each column of the X-axis OFDM code and corresponding column of the Y-axis OFDM code correspond to a different transmission time for the multi-carrier optical signal.

10. The method of claim 9, wherein:

each row of the X-axis OFDM code and each corresponding row of the Y-axis OFDM code are generated using a set of Golay sequences; and
the rows of the X- and Y-axis OFDM codes are generated using two or more different sets of Golay sequences.

11. The method of any one of claims 8-10, wherein the receiver comprises:

a data recovery stage (410, 510) that recovers baseband data (413($i$), 513($i$)) from each sub-band in the multi-carrier reflected optical signal;

a correlation stage (420, 520) that generates sub-band Jones matrices (423($i$), 523($i$)) for each sub-band from the recovered baseband data for the sub-band;

a computation stage (430) that generates sub-band differential phase data (433($i$)) for each sub-band from the corresponding sub-band Jones matrices;

a combination module (440) that combines the sub-band differential phase data for the multiple sub-bands to generate combined differential phase data (441); and

an event detection module (450) that process the combined differential phase data to detect the fiber events (451) along the optical fiber.

12. The method of any one of claims 8-11, wherein:

the optical transmitter (110) comprises:

a laser source (112) that generates a laser signal (113);
an optical coupler (114) that taps off a tapped portion (115a) of the laser signal for forwarding to the optical receiver (120);
a modulator (116) and an amplifier (118) that modulate and amplify another portion (115b) of the laser signal using the one or more digital coding sequences to generate the multi-carrier modulated optical signal (119); and

the optical receiver (120) comprises:

an optical mixer (122) that mixes the tapped portion (115a) of the laser signal with the multi-carrier reflected optical signal (151) to generate component optical signals (123);
an optical-to-electrical converter (124) and analog-to-digital converters (126) that generate digital electrical signals (127) from the component optical signals (123); and
a digital signal processor DSP (128) that processes the digital electrical signals (127) to detect the fiber events along the optical fiber.

**Patentansprüche**

1. Vorrichtung (100), die Folgendes umfasst:

einen optischen Sender (110), der dazu ausgelegt ist, auf Basis von einer oder mehreren digitalen Codesequenzen (129) für jedes von mehreren Unterbändern ein Quellsignal (115b) zu modulieren, um via einen optischen Zirkulator 140 ein mehrträgermoduliertes optisches Signal (119) in einen Lichtleiter (160) zu injizieren, der eine Vielzahl von optischen Reflektoren ($S_m$) aufweist, die entlang des Lichtleiters verteilt sind; und
einen optischen Empfänger (120), der dazu ausgelegt ist, (i) ein mehrträgerreflektiertes optisches Signal (161), das Reflexionen des mehrträgermodulierten Signals von den optischen Reflektoren entspricht, zu empfangen und (ii) das mehrträgerreflektierte Signal unter Verwendung der mindestens einen digitalen Codiersequenz zu verarbeiten, um entlang des Lichtleiters Faserereignisse zu detektieren, wobei jedes Unterband unter Verwendung von binären Phasenumtastungs(BPSK)- oder Quadraturphasenumtastungs(QPSK)-Codes für X- und Y-Polarisationen des mehrträgermodulierten optischen Signals codiert wird.

2. Vorrichtung nach Anspruch 1, wobei die BPSK- oder die QPSK-Codes für die mehreren Unterbänder einen zweidimensionalen orthogonalen X-Achsen-Frequenzmultiplexing(OFDM)-Code oder einen zweidimensionalen Y-Achsen-OFDM-Code bilden, wobei:

jede Zeile des X-Achsen-OFDM-Codes und die entsprechende Zeile des Y-Achsen-OFDM-Codes einem anderen Unterband des optischen Mehrträgersignals entsprechen; und
jede Spalte des X-Achsen-OFDM-Codes und die entsprechende Spalte des Y-Achsen-OFDM-Codes einer anderen Übertragungszeit für das optische Mehrträgersignal entsprechen.

3. Vorrichtung nach Anspruch 2, wobei:

jede Zeile des X-Achsen-OFDM-Codes und jede entsprechende Zeile des Y-Achsen-OFDM-Codes unter Verwendung eines Satzes von Golay-Sequenzen erzeugt werden und
die Zeilen der X- und der Y-Achsen-OFDM-Codes unter Verwendung von zwei oder mehr verschiedenen Sätzen von Golay-Sequenzen erzeugt werden.

4. Vorrichtung nach einem der Ansprüche 1-3, wobei der Empfänger Folgendes umfasst:

eine Datenwiederherstellungsstufe (410, 510), die dazu ausgelegt ist, Basisbanddaten (413(i), 513(i)) aus jedem Unterband im mehrträgerreflektierten optischen Signal wiederherzustellen; und
eine Korrelationsstufe (420, 520), die dazu ausgelegt ist, für jedes Unterband aus den wiederhergestellten Basisbanddaten für das Unterband Unterband-Jones-Matrices (423(i), 523(i)) zu erzeugen.

5. Vorrichtung nach Anspruch 4, wobei der Empfänger ferner Folgendes umfasst:

eine Berechnungsstufe (430), die dazu ausgelegt ist, für jedes Unterband aus den entsprechenden Unterband-Jones-Matrices Unterbanddifferenzphasendaten (433(i)) zu erzeugen;
ein Kombinationsmodul (440), das dazu ausgelegt ist, die Unterbanddifferenzphasendaten für die mehreren Unterbänder zu kombinieren, um kombinierte Differenzphasendaten (441) zu erzeugen; und
ein Ereignisdetektionsmodul (450), das dazu ausgelegt ist, die kombinierten Differenzphasendaten zu verarbeiten, um die Faserereignisse (451) entlang des Lichtleiters zu detektieren.

6. Vorrichtung nach Anspruch 4, wobei der Empfänger ferner Folgendes umfasst:

eine Berechnungsstufe (530), die dazu ausgelegt ist, für jedes Unterband aus den entsprechenden Unterband-Jones-Matrices Unterbanddifferenzphasendaten (533(i)) zu erzeugen;
eine Ereignisdetektionsstufe (540), die dazu ausgelegt ist, die Unterbanddifferenzphasendaten zu verarbeiten, um einen Unterbandsatz der Faserereignisse (543(i)) entlang des Lichtleiters für jedes Unterband zu detektieren; und
ein Kombinationsmodul (550), das dazu ausgelegt ist, die Unterbandsätze von Faserereignissen für die mehreren Unterbänder zu kombinieren, um einen kombinierten Satz der Faserereignisse (551) entlang des Lichtleiters zu erzeugen.

7. Vorrichtung nach einem der Ansprüche 1-6, wobei:
der optische Sender (110) Folgendes umfasst:

eine Laserquelle (112), die dazu ausgelegt ist, ein Lasersignal (113) zu erzeugen;
einen Optokoppler (114), der dazu ausgelegt ist, einen abgegriffenen Abschnitt (115a) des Lasersignals zum Weiterleiten zum optischen Empfänger (120) abzugreifen;
einen Modulator (116) und einen Verstärker (118), die dazu ausgelegt sind, einen anderen Abschnitt (115b) des Lasersignals unter Verwendung der einen oder der mehreren digitalen Codiersequenzen zu modulieren und zu verstärken, um ein mehrträgermoduliertes optisches Signal (119) zu erzeugen; und
der optische Empfänger (120) Folgendes umfasst:

einen optischen Mischer (122), der dazu ausgelegt ist, den abgegriffenen Abschnitt (115a) des Lasersignals mit dem mehrträgerreflektierten optischen Signal (151) zu mischen, um optische Komponentensignale (123) zu erzeugen;
Optisch-Elektrisch-Wandler (124) und Analog-DigitalWandler (126), die dazu ausgelegt sind, aus den optischen Komponentensignalen (123) digitale elektrische Signale (127) zu erzeugen; und
einen digitalen Signalprozessor DSP (128), der dazu ausgelegt ist, die digitalen elektrischen Signale (127) zu verarbeiten, um die Faserereignisse entlang des Lichtleiters zu detektieren.

8. Verfahren zum Detektieren von Faserereignissen entlang eines Lichtleiters (160) mit einer Vielzahl von optischen Reflektoren ($S_m$), die entlang des Lichtleiters verteilt sind, wobei das Verfahren Folgendes umfasst:

Modulieren eines Quellsignals (115b) auf Basis von einer oder mehreren digitalen Codesequenzen (129) für jedes von mehreren Unterbändern unter Verwendung eines optischen Senders (110), um ein mehrträgermoduliertes optisches Signal (119) zu erzeugen;
Injizieren des mehrträgermodulierten optischen Signals (119) via einen optischen Zirkulator (140) in den Lichtleiter (160); und

Verwenden eines optischen Empfängers (120) für Folgendes: (i) Empfangen eines mehrträgerreflektierten optischen Signals (161), das Reflexionen des mehrträgermodulierten Signals von den optischen Reflektoren entspricht, und (ii) Verarbeiten des mehrträgerreflektierten Signals unter Verwendung der mindestens einen digitalen Codiersequenz, um entlang des Lichtleiters Faserereignisse zu detektieren, wobei der optische Sender jedes Unterband unter Verwendung von binären Phasenumtastungs(BPSK)- oder Quadraturphasenumtastungs(QPSK)-Codes für X- und Y-Polarisationen des mehrträgermodulierten optischen Signals codiert.

9. Verfahren nach Anspruch 8, wobei die BPSK- oder die QPSK-Codes für die mehreren Unterbänder einen zweidimensionalen orthogonalen X-Achsen-Frequenzmultiplexing(OFDM)-Code oder einen zweidimensionalen Y-Achsen-OFDM-Code bilden, wobei:

jede Zeile des X-Achsen-OFDM-Codes und die entsprechende Zeile des Y-Achsen-OFDM-Codes einem anderen Unterband des optischen Mehrträgersignals entsprechen; und
jede Spalte des X-Achsen-OFDM-Codes und die entsprechende Spalte des Y-Achsen-OFDM-Codes einer anderen Übertragungszeit für das optische Mehrträgersignal entsprechen.

10. Verfahren nach Anspruch 9, wobei:

jede Zeile des X-Achsen-OFDM-Codes und jede entsprechende Zeile des Y-Achsen-OFDM-Codes unter Verwendung eines Satzes von Golay-Sequenzen erzeugt werden; und
die Zeilen der X- und der Y-Achsen-OFDM-Codes unter Verwendung von zwei oder mehr verschiedenen Sätzen von Golay-Sequenzen erzeugt werden.

11. Verfahren nach einem der Ansprüche 8-10, wobei der Empfänger Folgendes umfasst:

eine Datenwiederherstellungsstufe (410, 510), die Basisbanddaten (413($i$), 513($i$)) aus jedem Unterband im mehrträgerreflektierten optischen Signal wiederherstellt;
eine Korrelationsstufe (420, 520), die für jedes Unterband aus den wiederhergestellten Basisbanddaten für das Unterband Unterband-Jones-Matrices (423(i), 523(i)) erzeugt;
eine Berechnungsstufe (430), die für jedes Unterband aus den entsprechenden Unterband-Jones-Matrices Unterbanddifferenzphasendaten (433(i)) erzeugt;
ein Kombinationsmodul (440), das die Unterbanddifferenzphasendaten für die mehreren Unterbänder kombiniert, um kombinierte Differenzphasendaten (441) zu erzeugen; und
ein Ereignisdetektionsmodul (450), das die kombinierten Differenzphasendaten verarbeitet, um die Faserereignisse (451) entlang des Lichtleiters zu detektieren.

12. Verfahren nach einem der Ansprüche 8-11, wobei:
der optische Sender (110) Folgendes umfasst:

eine Laserquelle (112), die ein Lasersignal (113) erzeugt;
einen Optokoppler (114), der einen abgegriffenen Abschnitt (115a) des Lasersignals zum Weiterleiten zum optischen Empfänger (120) abgreift;
einen Modulator (116) und einen Verstärker (118), die einen anderen Abschnitt (115b) des Lasersignals unter Verwendung der einen oder der mehreren digitalen Codiersequenzen modulieren und verstärken, um ein mehrträgermoduliertes optisches Signal (119) zu erzeugen; und
der optische Empfänger (120) Folgendes umfasst:

einen optischen Mischer (122), der den abgegriffenen Abschnitt (115a) des Lasersignals mit dem mehrträgerreflektierten optischen Signal (151) mischt, um optische Komponentensignale (123) zu erzeugen;
einen Optisch-Elektrisch-Wandler (124) und einen Analog-Digital-Wandler (126), die aus den optischen Komponentensignalen (123) digitale elektrische Signale (127) erzeugen; und
einen digitalen Signalprozessor DSP (128), der die digitalen elektrischen Signale (127) verarbeitet, um die Faserereignisse entlang des Lichtleiters zu detektieren.

**Revendications**

1. Appareil (100) comprenant :

un émetteur optique (110) configuré pour moduler un signal source (115b) sur la base d'une ou plusieurs séquences de code numérique (129) pour chacune de multiples sous-bandes pour injecter, via un circulateur optique 140, un signal optique modulé multi-porteuse (119) dans une fibre optique (160) ayant une pluralité de réflecteurs optiques ($S_m$) répartis le long de la fibre optique ; et

un récepteur optique (120) configuré pour (i) recevoir un signal optique multi-porteuse (161) réfléchi correspondant à des réflexions du signal optique modulé multi-porteuse à partir des réflecteurs optiques et (ii) traiter le signal optique multi-porteuse réfléchi en utilisant la au moins une séquence de codage numérique pour détecter des événements de fibre le long de la fibre optique, dans lequel chaque sous-bande est codée en utilisant des codes de modulation par déplacement de phase bivalente BPSK ou de modulation par déplacement de phase quadrivalente QPSK pour les polarisations X et Y du signal optique modulé multi-porteuse.

2. Appareil selon la revendication 1, dans lequel les codes BPSK ou QPSK pour les multiples sous-bandes forment un code de multiplexage par répartition en fréquences orthogonales OFDM bidimensionnel sur l'axe X et un code OFDM bidimensionnel sur l'axe Y, dans lequel :

chaque ligne du code OFDM sur l'axe X et la ligne correspondante du code OFDM sur l'axe Y correspondent à une sous-bande différente du signal optique multi-porteuse ; et

chaque colonne du code OFDM sur l'axe X et la colonne correspondante du code OFDM sur l'axe Y correspondent à un temps d'émission différent pour le signal optique multi-porteuse.

3. Appareil selon la revendication 2, dans lequel :

chaque ligne du code OFDM sur l'axe X et chaque ligne correspondante du code OFDM sur l'axe Y sont générées en utilisant un ensemble de séquences de Golay ; et

les lignes des codes OFDM sur les axes X et Y sont générées en utilisant deux ensembles différents ou plus de séquences de Golay.

4. Appareil selon l'une quelconque des revendications 1 à 3, dans lequel le récepteur comprend :

un étage de récupération de données (410, 510) configuré pour récupérer des données de bande de base (413(i), 513(i)) à partir de chaque sous-bande dans le signal optique multi-porteuse réfléchi ; et

un étage de corrélation (420, 520) configuré pour générer des matrices de Jones de sous-bande (423(*i*), 523(*i*)) pour chaque sous-bande à partir des données de bande de base récupérées pour la sous-bande.

5. Appareil selon la revendication 4, dans lequel le récepteur comprend en outre :

un étage de calcul (430) configuré pour générer des données de phase différentielle de sous-bande (433(*i*)) pour chaque sous-bande à partir des matrices de Jones de sous-bande correspondantes ;

un module de combinaison (440) configuré pour combiner les données de phase différentielle de sous-bande pour les multiples sous-bandes pour générer des données de phase différentielle combinées (441) ; et

un module de détection d'événement (450) configuré pour traiter les données de phase différentielle combinées pour détecter les événements de fibre (451) le long de la fibre optique.

6. Appareil selon la revendication 4, dans lequel le récepteur comprend en outre :

un étage de calcul (530) configuré pour générer des données de phase différentielle de sous-bande (533(*i*)) pour chaque sous-bande à partir des matrices de Jones de sous-bande correspondantes ;

un étage de détection d'événements (540) configuré pour traiter les données de phase différentielle de sous-bande pour détecter un ensemble de sous-bande des événements de fibre (543 (i)) le long de la fibre optique pour chaque sous-bande ; et

un module de combinaison (550) configuré pour combiner les ensembles de sous-bande d'événements de fibre pour les multiples sous-bandes pour générer un ensemble combiné des événements de fibre (551) le long de la fibre optique.

7. Appareil selon l'une quelconque des revendications 1 à 6, dans lequel :
l'émetteur optique (110) comprend :

une source laser (112) configurée pour générer un signal laser (113) ;

un coupleur optique (114) configuré pour prélever une partie prélevée (115a) du signal laser pour la transmettre au récepteur optique (120) ;
un modulateur (116) et un amplificateur (118) configurés pour moduler et amplifier une autre partie (115b) du signal laser en utilisant les une ou plusieurs séquences de codage numérique pour générer le signal optique modulé multi-porteuse (119) ; et
le récepteur optique (120) comprend :

un mélangeur optique (122) configuré pour mélanger la partie prélevée (115a) du signal laser avec le signal optique multi-porteuse réfléchi (151) pour générer des composantes de signaux optiques (123) ;
des convertisseurs optique-électrique (124) et des convertisseurs analogique-numérique (126) configurés pour générer des signaux électriques numériques (127) à partir des composantes de signaux optiques (123) ; et
un processeur de signal numérique DSP (128) configuré pour traiter les signaux électriques numériques (127) pour détecter les événements de fibre le long de la fibre optique.

8. Procédé pour détecter des événements de fibre le long d'une fibre optique (160) ayant une pluralité de réflecteurs optiques ($S_m$) répartis le long de la fibre optique, le procédé comprenant les étapes consistant à :

moduler un signal source (115b) sur la base d'une ou plusieurs séquences de code numérique (129) pour chacune de multiples sous-bandes en utilisant un émetteur optique (110) pour générer un signal optique modulé multi-porteuse (119) ;
injecter le signal optique modulé multi-porteuse (119) via un circulateur optique (140) dans la fibre optique (160) ; et
utiliser un récepteur optique (120) pour :
(i) recevoir un signal optique multi-porteuse (161) réfléchi correspondant à des réflexions du signal optique modulé multi-porteuse à partir des réflecteurs optiques et (ii) traiter le signal optique multi-porteuse réfléchi en utilisant la au moins une séquence de codage numérique pour détecter des événements de fibre le long de la fibre optique, dans lequel l'émetteur optique code chaque sous-bande en utilisant des codes de modulation par déplacement de phase bivalente BPSK ou de modulation par déplacement de phase quadrivalente QPSK pour les polarisations X et Y du signal optique modulé multi-porteuse.

9. Procédé selon la revendication 8, dans lequel les codes BPSK ou QPSK pour les multiples sous-bandes forment un code de multiplexage par répartition en fréquences orthogonales OFDM bidimensionnel sur l'axe X et un code OFDM bidimensionnel sur l'axe Y, dans lequel :

chaque ligne du code OFDM sur l'axe X et la ligne correspondante du code OFDM sur l'axe Y correspondent à une sous-bande différente du signal optique multi-porteuse ; et
chaque colonne du code OFDM sur l'axe X et la colonne correspondante du code OFDM sur l'axe Y correspondent à un temps d'émission différent pour le signal optique multi-porteuse.

10. Procédé selon la revendication 9, dans lequel :

chaque ligne du code OFDM sur l'axe X et chaque ligne correspondante du code OFDM sur l'axe Y sont générées en utilisant un ensemble de séquences de Golay ; et
les lignes des codes OFDM sur les axes X et Y sont générées en utilisant deux ensembles différents ou plus de séquences de Golay.

11. Procédé selon l'une quelconque des revendications 8 à 10, dans lequel le récepteur comprend :

un étage de récupération de données (410, 510) qui récupère des données de bande de base (413(*i*), 513(*i*)) à partir de chaque sous-bande dans le signal optique multi-porteuse réfléchi ;
un étage de corrélation (420, 520) qui génère des matrices de Jones de sous-bande (423(*i*), 523(*i*)) pour chaque sous-bande à partir des données de bande de base récupérées pour la sous-bande ;
un étage de calcul (430) qui génère des données de phase différentielle de sous-bande (433(*i*)) pour chaque sous-bande à partir des matrices de Jones de sous-bande correspondantes ;
un module de combinaison (440) qui combine les données de phase différentielle de sous-bande pour les multiples sous-bandes pour générer des données de phase différentielle combinées (441) ; et
un module de détection d'événement (450) qui traite les données de phase différentielle combinées pour détecter les événements de fibre (451) le long de la fibre optique.

12. Procédé selon l'une quelconque des revendications 8 à 11, dans lequel :
l'émetteur optique (110) comprend :

une source laser (112) qui génère un signal laser (113) ;
un coupleur optique (114) qui prélève une partie prélevée (115a) du signal laser pour la transmettre au récepteur optique (120) ;
un modulateur (116) et un amplificateur (118) qui modulent et amplifient une autre partie (115b) du signal laser en utilisant les une ou plusieurs séquences de codage numérique pour générer le signal optique modulé multi-porteuse (119) ; et
le récepteur optique (120) comprend :

un mélangeur optique (122) qui mélange la partie prélevée (115a) du signal laser avec le signal optique multi-porteuse réfléchi (151) pour générer des composantes de signaux optiques (123) ;
un convertisseur optique-électrique (124) et des convertisseurs analogique-numérique (126) qui génèrent des signaux électriques numériques (127) à partir des composantes de signaux optiques (123) ; et
un processeur de signal numérique DSP (128) qui traite les signaux électriques numériques (127) pour détecter les événements de fibre le long de la fibre optique.

FIG. 1    100

EP 3 694 117 B1

FIG. 2

FIG. 3

FIG. 4

EP 3 694 117 B1

127 → 512(1) → CARRIER 1 FILTER → 4 513(1) → 522(1) → CORRELATION 1 → 523(1) → 532(1) → COMPUTATION → 533(1) → 542(1) → EVENT DETECTION → 543(1) → 550 COMBINATION → 551

127 → 512(2) → CARRIER 2 FILTER → 4 513(2) → 522(2) → CORRELATION 2 → 523(2) → 532(2) → COMPUTATION → 533(2) → 542(2) → EVENT DETECTION → 543(2)

127 → 512(N) → CARRIER N FILTER → 4 513(N) → 522(N) → CORRELATION N → 523(N) → 532(N) → COMPUTATION → 533(N) → 542(N) → EVENT DETECTION → 543(N)

510    520    530    540

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2765400 A1


**Non-patent literature cited in the description**

- **X. FAN et al.** Distributed fiber-optic vibration sensing based on phase extraction from optical reflectometry. *Journal of Lightwave Technology,* 2017, vol. 35 (16), 3281-3288
- **AND H. MARTINS et al.** Real time dynamic strain monitoring of optical links using back reflection of live PSK data. *Optics Express,* 2016, vol. 24 (19), 22303-22318
- **J. ZHANG et al.** Long range fading free phase-sensitive reflectometry based on multi-tone NLFM pulse. *proceeding of 26th Conference on Optical Fiber Sensors (OFS), Lausanne,* September 2018
- **C. DORIZE ; E. AWWAD.** Enhancing the performance of coherent OTDR systems with polarization diversity complementary codes. *Optics Express,* 2018, vol. 26 (10), 12878-12890
- Large Bandwidth Phase-Sensitive DAS with Novel Polarization-Multiplexed Probing Technique. **E. AWWAD ; C. DORIZE ; P. BRINDEL ; J. RENAUDIER ; G. CHARLET.** Optical Fiber Sensors (OFS26) conference. Lausanne, 2018